# EUROPEAN PATENT SPECIFICATION

(11) **EP 3 508 942 B1**
(45) Date of publication and mention of the grant of the patent: **26.08.2020**
(21) Application number: 18150603.1
(22) Date of filing: 08.01.2018
(51) Int. Cl.: G05D 23/19, F24D 3/02, F24D 19/10

(54) **TEMPERATURE CONTROL SYSTEM**
TEMPERATURREGELUNGSSYSTEM
SYSTÈME DE CONTRÔLE DE LA TEMPÉRATURE

(43) Date of publication of application: 10.07.2019
(60) Divisional application: 19218766.4
(73) Proprietor: Danfoss A/S, 6430 Nordborg (DK)
(72) Inventor: Hesseldahl, Søren, 6430 Nordborg (DK); Gammeljord, Peter, 6430 Nordborg (DK); Jensen, Jes Vestervang, 6430 Nordborg (DK)

(56) References cited:
- WO-A1-2017/086871
- US-A1- 2013 158 720
- US-A1- 2015 122 475

## Description

The present invention relates to a temperature control system for influencing a temperature in at least one room of a building, the temperature control system comprising at least two heat exchangers, each heat exchanger having a control valve, a supply port and a return port, the ports being connected to a fluid supply system supplying a heat carrying fluid, a sensor arrangement detecting at least one physical characteristic of the heat carrying fluid at each heat exchanger and at least an additional physical characteristic of the system, the system further comprising processing means receiving data from the sensor arrangement, wherein the processing means comprise diagnostic means detecting a kind of a malfunction of the temperature control system.

Such a system is known, for example, from US 2015/0122475 A1.

A further system of a similar kind is known, for example, from US 2013/0081799 A1.

The system can be used for heating or for cooling the rooms of the building. To simplify the following explanation, the explanation is made with respect to heating the rooms. In this case the heat carrying fluid is of elevated temperature, for example hot water of 50° C to 70° C. However, a similar or the same system can be used for cooling the rooms. In this case the heat carrying fluid has a temperature below 20° C.

After the construction of a building and the installation of the heating system it can be expected that the system works satisfactorily. However, this is not always the case. A further problem arises when changes have been made in the building which is often the case in office buildings. After such a change it may be possible that the system does not work to the satisfaction of the users of the system. In this case an installer has to be called to repair or maintain the system. The search for the cause of the malfunction can be time consuming and accordingly expensive. The same is true for malfunctions which appear during normal operation.

The object underlying the invention is to facilitate finding of a defect in a temperature control system.

This object is solved in that the processing means detect a clogging of a heat exchanger or a stuck control valve when at least one of the following conditions are fulfilled:
a) a command has been given to open a control valve of a heat exchanger but an inlet temperature of the heat exchanger varies in a predetermined range only.
b) a difference between an inlet temperature and an outlet temperature of the heat exchanger is smaller than a predetermined value over more than a predetermined time and a desired room temperature is not reached after the predetermined time and a command has given to fully open the valve and the conditions are not fulfilled in a predetermined number of other rooms,
c) a difference between an inlet temperature and an average room temperature is smaller than a predetermined value.

The processing means already receive data from a number of sensors of the sensor arrangement. These data show a state or a picture of the system. If this state does not match a predetermined state, there is not only an error. It is also possible to detect a kind of the error or a kind of a malfunction. For example, clogging of a heat exchanger will give a combination of physical characteristics different from a fault in the source of the heat carrying fluid. For this purpose the processing means use the diagnostic means which can be realized by hardware means or by software functions or by a combination of hardware means and software functions. All of these 3 conditions take into account that no heat has been exchanged by the heat exchanger which clearly indicates that there is no sufficient flow of heat carrying medium through the heat exchanger.

In an embodiment of the invention the physical characteristic of the heat carrying fluid is an outlet temperature at the heat exchanger. The outlet temperature at the heat exchanger shows whether the heat exchanger has thermal energy exchanged with the room.

In an embodiment of the invention the physical characteristic is a difference between an inlet temperature and the outlet temperature. When, for example, both temperatures are almost equal, this is a clear indication that the heat exchanger does not work correctly.

In an embodiment of the invention the additional physical characteristic of the system is an opening degree of at least one of the control valves. The opening degree can, for example, correspond to other characteristics for example the room temperature or the outlet temperature. If this is not the case, this could be an indication that a fault in the control valve has occurred. It is possible, for example, to measure the opening degree of the control valve. It is also possible to use an information about a commanded opening degree of the control valve.

In an embodiment of the invention the processing means process the physical characteristics over a predetermined time. In other words, the processing means do not immediately react after a change in the physical characteristics. The processing means wait, for example, whether a stable condition will come out. If the physical characteristics in this stable condition do not match the desired values, this can be an indication of the kind of error.

In an embodiment of the invention the processing means compare at least one of the physical characteristics with an expected value.

In an embodiment of the invention the expected value is based on at least one other physical characteristic. When, for example, the control valve is opened or the control valve is commanded to be open and the outlet temperature does not change accordingly, this is an indication that the heat exchanger has been clogged or that the valve does not work correctly.

In an embodiment of the invention the processing means detect a wrong size of a heat exchanger when at least one of the following conditions are fulfilled:
a) a difference between an inlet temperature and an outlet temperature of the heat exchanger is smaller than a predetermined value and the average room temperature does not match a desired room temperature,
b) the outlet temperature differs more than a predetermined value from the average room temperature,
c) a difference between an inlet temperature and an outlet temperature of the heat exchanger is smaller than a predetermined value over more than a predetermined time and a desired room temperature is not reached after the predetermined time and a command has given to fully open the valve and the conditions are fulfilled in a predetermined number of other rooms.

A situation in which the heat exchanger has a wrong size can occur not only after the first construction of the building, but also after changes in the building. In office buildings it is possible to move walls between rooms and to change the size of the rooms. In such a case it is possible that a room becomes too large for the heat exchanger.

In an embodiment of the invention the processing means detect a malfunction of the supply of the heat carrying fluid when at least one of the following conditions are fulfilled:
a) a difference between an inlet temperature and an outlet temperature is smaller than a predetermined value and the difference between the room temperature and a desired room temperature is larger than a predetermined value.
b) control valves are open and inlet temperature is smaller than an expected temperature,
c) a difference between an inlet temperature and an average room temperature is smaller than a predetermined value.
   The desired room temperature can be, for example, the room temperature set point.

In an embodiment of the invention the processing means detect a bad pipe insulation if at a predetermined difference between inlet temperature and outlet temperature the inlet temperature of heat exchangers in the systems varies more than a predetermined range. When in such a case a heat exchanger near the source of the heat carrying fluid receives a heat carrying fluid with a much higher temperature than a heat exchanger remote from the heat carrying fluid source this is a clear indication that some heat has been lost on the way.

In an embodiment of the invention the processing means are distributed in the system. Accordingly it is not necessary to use a single central unit to receive all data, although this is of course possible. The processing means can be formed by a number of units which are connected by a network.

In an embodiment of the invention the control valves are controlled by actuators and at least two actuators form a part of the processing means. Each actuator has its own control means to control the position of the control valve. These control means usually receive data, for example from the room temperature sensor to make it possible to adjust the control valve in such a way that the heat exchanger outputs enough heat to reach the room temperature set point. Since such data are already available, the different control units in the system (for example in each actuator) can decide what they want to contribute with in relation to the overall task needed for diagnostic. One controller function can then do the overall evaluation and receives already partly evaluated data from the other controllers and then, for example, send out a message that a problem exists in the system and what kind of problem it is.

In an embodiment of the invention the processing means detect a malfunction when a combination of a low temperature set point and a low delta T in one room and a higher temperature set point and a higher delta T in a neighbor room occurs. The delta T is the temperature difference between the inlet temperature and the outlet temperature of a radiator. When this situation occurs, an alarm or other kind of message could be produced that one room needs to change the temperature set point in order not to heat up the room next door or the neighbor apartment.

An embodiment of the invention will now be described in more detail with reference to the drawing, wherein:

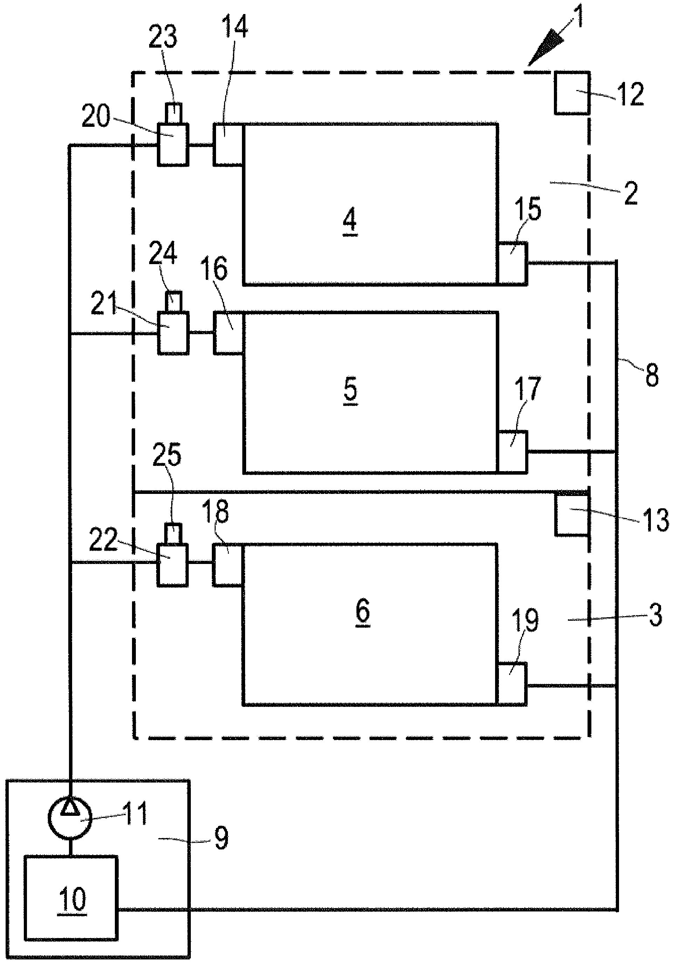

- Fig. 1: shows a schematic diagram of a temperature control system for influencing a temperature in at least one room of a building.

The invention is explained in the following in connection with a heating system. However, it can be used as well in connection with a cooling system.

The system comprises two rooms 2, 3, which belong to a building. In the first room 2 there are two heat exchangers 4, 5, whereas in the second room 3 only one heat exchanger 6 is mounted. It is possible to consider apartments instead of rooms 2, 3. The heat exchangers 4, 5, 6 can be, for example, in form of radiators.

The heat exchangers 4, 5, 6 are connected to a supply line 7 and to a return line 8. The supply line 7 is connected to a source 9 of a heat carrying fluid, for example hot water. To this end the source 9 comprises a boiler 10 and a pump 11. In the boiler 10 the heat carrying fluid is heated. The pump 11 is used to drive the heated fluid through the supply line 7 to the radiators 4, 5, 6.

The return line 8 connects an output of the heat exchangers 4, 5, 6 again back to the source 9 and to the boiler 10.

The first room 2 comprises a room temperature sensor 12. The second room 3 comprises a room temperature sensor 13.

Furthermore, the heat exchanger comprises a first inlet temperature sensor 14 and a first outlet temperature sensor 15. The second heat exchanger 5 comprises a second inlet temperature sensor 16 and a second outlet temperature 17. The third heat exchanger 6 comprises a third inlet temperature sensor 18 and a third outlet temperature sensor 19.

The first heat exchanger 4 is connected in series with a first control valve 20. The first input temperature sensor 14 is mounted between the first control valve 20 and the first heat exchanger 4 or in an actuator 24 of the first control valve 20. The second heat exchanger 5 is connected with a second control valve 21 in series. Again the second input temperature sensor 16 is mounted between the second control valve 21 and the second heat exchanger 5 or in an actuator 25 of the second control valve 21.

The third heat exchanger 6 is connected in series with a third control valve 22 and the third input temperature sensor 18 is mounted between the third control valve 22 and the third heat exchanger 6 or in an actuator 26 of the third control valve 22.

The first control valve 20 is actuated by the first actuator 23. The second control valve 21 is actuated by the second actuator 24. The third control valve 22 is actuated by the third actuator 25. All actuators 23-25 are "intelligent" actuators comprising an own processing unit. The actuators 23, 24, 25 are mounted on the control valves 20, 21, 22. In other words, the control valves 20, 21, 22 comprise each an actuator 23, 24, 25.

The first room temperature sensor 12 is connected to the first actuator 23 and to the second actuator 24 so that the actuators 23, 24 can control the first control valve 20 and the second control valve 21 which in turn control the flow of the heat carrying fluid through the heat exchangers 4, 5 with the purpose that the temperature in the first room 2 reaches a room temperature set point or a desired room temperature.

In a similar way the second room temperature sensor 13 is connected to the third actuator 25 which in turn controls the third valve 22 to reach a room temperature in the second room 3 which corresponds to a room temperature set point or a desired room temperature.

In the drawing the temperature sensors 12, 13 are shown as separately placed sensors. However, they can be placed as well together with the actuators 23, 24, 25 or they can be integrated into the actuators 23, 24, 25.

The actuators 23, 24, 25 are able to detect the opening degree of the respective control valves 20, 21, 22. Furthermore, they "know" which opening degree should be reached. The opening degree can, for example, be given by a control unit receiving signals from the room temperature sensors 12, 13.

Accordingly, the actuators 23, 24, 25 can be considered as valve sensor or opening degree sensor.

All sensors 12-19, 23-25 together form a sensor arrangement. The sensor arrangement can have more or less than the sensors shown depending among others on the number of radiators and on the number of rooms to be heated.

The actuators 23, 24, 25 are able to react on a difference between the room temperature detected by the room temperature sensors 12, 13 and a room temperature set point. They already collect or receive data from the respective sensors. Furthermore, they can receive data from the inlet temperature sensors 14, 16, 18 and from the outlet temperature sensors 15, 17, 19. The actuators 23, 24, 25 therefore form processing means receiving data from the sensor arrangement. The processing means are distributed over the system. Furthermore, more control units or processing units can be provided, for example in the source 9. It is further possible to use processing units which are arranged outside of the system 1, for example in a cloud computing cluster or in a computer outside the system 1.

The connection between the sensor arrangement and the processing means 23, 24, 25 can be made by wire or wireless. Such a connection is not shown in the drawing. However, the person skilled in the art will know how to connect sensors and actuators and the respective processing means.

The processing means comprise diagnostic means which are able to detect a kind of a malfunction of the temperature control system.

Basically there are some possibilities in which such a malfunction can occur.

The malfunction can be a clogged heat exchanger or a stuck valve. In both cases the flow of the heat carrying fluid through the heat exchangers 4, 5, 6 is blocked or at least throttled. The result is that the temperatures measured by the sensor arrangement, in particular by the inlet temperature sensors 14, 16, 18 and the outlet temperature sensors 15, 17, 19 deviate from a normal behavior.

When an actuator 23, 24, 25 opens the corresponding control valve 20, 21, 22, but the inlet temperature detected by the inlet temperature sensor 14, 16, 18 does not change, this is an indication of a stuck valve or a clogged heat exchanger.

If a difference between the inlet temperature and the outlet temperature, the so called "delta C", in a room is too low for too long and the desired room temperature cannot be reached when the control valve is fully open and the above situation is not the case in a number of other rooms, the heat exchanger is clogged.

A further possibility is that the heat exchanger is too small which will be discussed below. If the inlet temperature is not considerable above the average room temperature, the heat exchanger is clogged as well. It is possible to define a first predetermined value for the difference between the inlet temperature and the average room temperature which is allowed. When the difference is larger than the first predetermined value, the system detects the error. Such an error can be indicated on a display or can be sent to a maintenance or service unit. The same is true for all other errors.

When, for example the control valve is fully open but the delta T of the heat exchanger is too large, this is an indication of too low flow which can be caused by dirt in pipes, stuck valve, clogged radiator etc. Accordingly, when the delta T on one more heat exchanger in a room is high for too long and the desired room temperature cannot be reached and the valve is fully open and the above situation is not the case in many other rooms, the heat exchanger is clogged.

Another malfunction can occur, when the same temperature on inlet and outlet is detected and the temperature in the rooms does not reach the desired value. This indicates that something is not in order with the source 9. For example the pump 11 might be broken so that there is too low flow or the boiler 10 is off so that the temperature of the heat carrying fluid is too low.

If the delta T on one or more heat exchangers 4, 5, 6 in a room 2, 3 is too low for too long and a desired room temperature cannot be reached and the control valve is fully open and the above situation is the case in many other rooms, the supply temperature is too low, the boiler 10 is off or the pump 11 is malfunctioning.

The same malfunction is determined if the input temperature is not considerably above the average room temperature, in this case a source 9 has a malfunction.

On the other hand, if the input temperature is considerable above the average room temperature, the supply temperature can be too low as well.

In all cases allowed differences between the room temperature and the supply temperature can be defined as predetermined values.

Another malfunction can be that the input temperature at a certain delta T on the heat exchangers 4, 5, 6 in the system 1 varies (more than an allowed range). This is a clear indication that the line losses are too high and a better insulation would be necessary.

A still further malfunction can be that the same temperature is detected at the inlet and the outlet of a heat exchanger 4, 5, 6 and at the same time the room temperature in the room 2, 3 is too low. In this case the heat exchanger is too small.

Based on the physical characteristics determined by the sensor arrangement it is possible to use the processing means already available in the actuators 23, 24, 25 (or elsewhere) to compare the physical characteristics determined by the sensor arrangement with expected values, wherein the expected values can be derived from other physical characteristics as well.

A further malfunction can be that a combination of a low temperature set point and a low delta T in one room 2 (or apartment) and a higher temperature set point and a higher delta T in a neighbor room 3 (or apartment) occurs. In this situation an alarm should be produced that one room 2 needs to change the temperature set point in order not to heat up the room 3 next door or neighboring apartments. The delta T is the temperature difference between the inlet temperature and the outlet temperature. A low delta T means that only few heat is radiated from the heat exchanger 4, 5, 6.

## Claims

1. Temperature control system (1) for influencing a temperature in at least one room (2, 3) of a building, the temperature control system (1) comprising at least two heat exchangers (4-6), each heat exchanger (4-6) having a control valve (20-22), a supply port and a return port, the ports being connected to a fluid supply system (7, 8) supplying a heat carrying fluid, a sensor arrangement (12-19; 23-25) detecting at least one physical characteristic of the heat carrying fluid at each heat exchanger (4-6) and at least an additional physical characteristic of the system, the system further comprising processing means (23-25) receiving data from the sensor arrangement (12-19, 23-25), wherein the processing means comprise diagnostic means detecting a kind of a malfunction of the temperature control system (1), **characterized in that** the processing means detect a clogging of a heat exchanger (4-6) or a stuck control valve (20-22) when at least one of the following conditions are fulfilled:
a) a command has been given to open a control valve (20-22) of a heat exchanger (4-6) but an inlet temperature of the heat exchanger (4-6) varies in a predetermined range only,
b) a difference between an inlet temperature and an outlet temperature of the heat exchanger (4-6) is smaller than a predetermined value over more than a predetermined time and a desired room temperature is not reached after the predetermined time and a command has given to fully open the control valve (20-22) and the conditions are not fulfilled in a predetermined number of other rooms (2, 3),
c) a difference between an inlet temperature and an average room temperature is smaller than a predetermined value.

2. System according to claim 1, **characterized in that** the physical characteristic of the heat carrying fluid is an outlet temperature at the heat exchanger (4-6).

3. System according to claim 2, **characterized in that** the physical characteristic is a difference between an inlet temperature and the outlet temperature of a heat exchanger (4-6).

4. System according to any of claims 1 to 3, **characterized in that** the additional physical characteristic of the system is an opening degree of at least one of the control valves (20-22).

5. System according to any of claims 1 to 4, **characterized in that** the processing means process the physical characteristics over a predetermined time.

6. System according to any of claims 1 to 5, **characterized in that** the processing means compare at least one of the physical characteristics with an expected value.

7. System according to claim 6, **characterized in that** the expected value is based on at least one other physical characteristic.

8. System according to any of claims 1 to 7, **characterized in that** the processing means detect a wrong size of a heat exchanger (4-6) when at least one of the following conditions are fulfilled:
a) a difference between an inlet temperature and an outlet temperature of the heat exchanger (4-6) is smaller than a predetermined value and the average room temperature does not match a desired room temperature,
b) the outlet temperature differs more than a predetermined value from the average room temperature,
c) a difference between an inlet temperature and an outlet temperature of the heat exchanger (4-6) is smaller than a predetermined value over more than a predetermined time and a desired room temperature is not reached after the predetermined time and a command has given to fully open the control valve (20-22) and the conditions are fulfilled in a predetermined number of other rooms.

9. System according to any of claims 1 to 8, **characterized in that** the processing means detect a malfunction of the supply of the heat carrying fluid when at least one of the following conditions are fulfilled:
a) a difference between an inlet temperature and an outlet temperature is smaller than a predetermined value and a difference between the room temperature and a desired room temperature is larger than a predetermined value,
b) control valves (20-22) are open and inlet temperature is smaller than an expected temperature,
c) a difference between an inlet temperature and an average room temperature is smaller than a predetermined value.

10. System according to any of claims 1 to 9, **characterized in that** the processing means detect a bad pipe insulation if at a predetermined difference between inlet temperature and outlet temperature the inlet temperature of heat exchangers in the system varies more than a predetermined range.

11. System according to any of claims 1 to 10, **characterized in that** the processing means are distributed in the system.

12. System according to claim 11, **characterized in that** the control valves (20-22) are controlled by actuators and at least two actuators form a part of the processing means.

13. System according to any of claims 1 to 12, **characterized in that** the processing means detect a malfunction when a combination of a low temperature set point and a low delta T in one room (2) and a higher temperature set point and a higher delta T in a neighbor room (3) occurs.

## Patentansprüche

1. Temperatursteuerungssystem (1) zum Beeinflussen einer Temperatur in mindestens einem Raum (2, 3) eines Gebäudes, wobei das Temperatursteuerungssystem (1) mindestens zwei Wärmetauscher (4-6), wobei jeder Wärmetauscher (4-6) ein Steuerventil (20-22), einen Zufuhranschluss und einen Rücklaufanschluss aufweist, wobei die Anschlüsse mit einem Fluidzufuhrsystem (7, 8) verbunden sind, das ein wärmeführendes Fluid zuführt, eine Sensoranordnung (12-19; 23-25), die mindestens eine physikalische Eigenschaft des wärmeführenden Fluids an jedem Wärmetauscher (4-6) und mindestens eine zusätzliche physikalische Eigenschaft des Systems detektiert, umfasst, wobei das System ferner Verarbeitungsmittel (23-25) umfasst, die Daten von der Sensoranordnung (12-19, 23-25) empfängt, wobei die Verarbeitungsmittel Diagnosemittel umfassen, die eine Art einer Fehlfunktion des Temperatursteuerungssystems (1) detektieren, **dadurch gekennzeichnet, dass** die Verarbeitungsmittel ein Verstopfen eines Wärmetauschers (4-6) oder ein verklemmtes Steuerventil (20-22) detektieren, wenn mindestens eine der folgenden Bedingungen erfüllt sind:
a) ein Befehl zum Öffnen eines Steuerventils (20-22) eines Wärmetauschers (4-6) wurde erteilt, aber eine Einlasstemperatur des Wärmetauschers (4-6) variiert nur in einem vorbestimmten Bereich,
b) eine Differenz zwischen einer Einlasstemperatur und einer Auslasstemperatur des Wärmetauschers (4-6) ist kleiner als ein vorbestimmter Wert über mehr als eine vorbestimmte Zeit und eine Raumsolltemperatur wird nicht erreicht nach der vorbestimmten Zeit und ein Befehl zum vollständigen Öffnen des Steuerventils (20-22) wurde erteilt und die Bedingungen sind in einer vorbestimmten Anzahl an anderen Räumen (2, 3) nicht erfüllt,
c) eine Differenz zwischen einer Einlasstemperatur und einer Raumdurchschnittstemperatur ist kleiner als ein vorbestimmter Wert.

2. System nach Anspruch 1, **dadurch gekennzeichnet, dass** die physikalische Eigenschaft des wärmeführenden Fluids eine Auslasstemperatur an dem Wärmetauscher (4-6) ist.

3. System nach Anspruch 2, **dadurch gekennzeichnet, dass** die physikalische Eigenschaft eine Differenz zwischen einer Einlasstemperatur und der Auslasstemperatur eines Wärmetauschers (4-6) ist.

4. System nach einem der Ansprüche 1 bis 3, **dadurch gekennzeichnet, dass** die zusätzliche physikalische Eigenschaft des Systems ein Öffnungsgrad mindestens eines der Steuerventile (20-22) ist.

5. System nach einem der Ansprüche 1 bis 4, **dadurch gekennzeichnet, dass** die Verarbeitungsmittel die physikalischen Eigenschaften über eine vorbestimmte Zeit verarbeiten.

6. System nach einem der Ansprüche 1 bis 5, **dadurch gekennzeichnet, dass** die Verarbeitungsmittel mindestens eine der physikalischen Eigenschaften mit einem erwarteten Wert vergleichen.

7. System nach Anspruch 6, **dadurch gekennzeichnet, dass** der erwartete Wert auf mindestens einer anderen physikalischen Eigenschaft basiert.

8. System nach einem der Ansprüche 1 bis 7, **dadurch gekennzeichnet, dass** die Verarbeitungsmittel eine falsche Größe eines Wärmetauschers (4-6) detektieren, wenn mindestens eine der folgenden Bedingungen erfüllt sind:
a) eine Differenz zwischen einer Einlasstemperatur und einer Auslasstemperatur des Wärmetauschers (4-6) ist kleiner als ein vorbestimmter Wert und die Raumdurchschnittstemperatur stimmt nicht mit einer Raumsolltemperatur überein,
b) die Auslasstemperatur differiert mehr als einen vorbestimmten Wert von der Raumdurchschnittstemperatur,
c) eine Differenz zwischen einer Einlasstemperatur und einer Auslasstemperatur des Wärmetauschers (4-6) ist kleiner als ein vorbestimmter Wert über mehr als eine vorbestimmte Zeit und eine Raumsolltemperatur wird nicht erreicht nach der vorbestimmten Zeit und ein Befehl zum vollständigen Öffnen des Steuerventils (20-22) wurde erteilt und die Bedingungen sind in einer vorbestimmten Anzahl an anderen Räumen erfüllt.

9. System nach einem der Ansprüche 1 bis 8, **dadurch gekennzeichnet, dass** die Verarbeitungsmittel eine Fehlfunktion der Zufuhr des wärmeführenden Fluids detektieren, wenn mindestens eine der folgenden Bedingungen erfüllt sind:
a) eine Differenz zwischen einer Einlasstemperatur und einer Auslasstemperatur ist kleiner als ein vorbestimmter Wert und eine Differenz zwischen der Raumtemperatur und einer Raumsolltemperatur ist größer als ein vorbestimmter Wert,
b) Steuerventile (20-22) sind geöffnet und eine Einlasstemperatur ist kleiner als eine erwartete Temperatur,
c) eine Differenz zwischen einer Einlasstemperatur und einer Raumdurchschnittstemperatur ist kleiner als ein vorbestimmter Wert.

10. System nach einem der Ansprüche 1 bis 9, **dadurch gekennzeichnet, dass** die Verarbeitungsmittel eine defekte Rohrisolierung detektieren, wenn bei einer vorbestimmten Differenz zwischen Einlasstemperatur und Auslasstemperatur die Einlasstemperatur von Wärmetauschern in dem System mehr als ein vorbestimmter Bereich variiert.

11. System nach einem der Ansprüche 1 bis 10, **dadurch gekennzeichnet, dass** die Verarbeitungsmittel in dem System verteilt sind.

12. System nach Anspruch 11, **dadurch gekennzeichnet, dass** die Steuerventile (20-22) durch Aktoren gesteuert sind und mindestens zwei Aktoren einen Teil der Verarbeitungsmittel bilden.

13. System nach einem der Ansprüche 1 bis 12, **dadurch gekennzeichnet, dass** die Verarbeitungsmittel eine Fehlfunktion detektieren, wenn eine Kombination eines niedrigen Temperaturgrenzwerts und eines niedrigen Delta-T in einem Raum (2) und eines höheren Temperaturgrenzwerts und eines höheren Delta-T in einem angrenzenden Raum (3) auftritt.

## Revendications

1. Système de contrôle de la température (1) pour influencer une température dans au moins une pièce (2, 3) d'un bâtiment, le système de contrôle de la température (1) comprenant au moins deux échangeurs de chaleur (4-6), chaque échangeur de chaleur (4-6) ayant une vanne de régulation (20-22), un orifice d'alimentation et un orifice de retour, les orifices étant reliés à un système d'alimentation en fluide (7, 8) alimentant un fluide caloporteur, un agencement de capteurs (12-19 ; 23-25) détectant au moins une caractéristique physique du fluide caloporteur au niveau de chaque échangeur de chaleur (4-6) et au moins une caractéristique physique supplémentaire du système, le système comprenant en outre des moyens de traitement (23-25) recevant des données de l'agencement de capteurs (12-19 ; 23-25), les moyens de traitement comprenant des moyens de diagnostic détectant un type de dysfonctionnement du système de contrôle de la température (1), **caractérisé en ce que** les moyens de traitement détectent un colmatage d'un échangeur de chaleur (4-6) ou une vanne de régulation bloquée (20-22) lorsqu'au moins une des conditions suivantes est remplie :
a) un ordre a été donné d'ouvrir une vanne de régulation (20-22) d'un échangeur de chaleur (4-6) mais une température d'entrée de l'échangeur de chaleur (4-6) ne varie que dans une plage prédéterminée,
b) une différence entre une température d'entrée et une température de sortie de l'échangeur de chaleur (4-6) est inférieure à une valeur prédéterminée pendant plus d'un temps prédéterminé et une température ambiante souhaitée n'est pas atteinte après le temps prédéterminé et une commande a été donnée pour ouvrir complètement la vanne de régulation (20-22) et les conditions ne sont pas remplies dans un nombre prédéterminé d'autres pièces (2, 3),
c) une différence entre une température d'entrée et une température ambiante moyenne est inférieure à une valeur prédéterminée.

2. Système selon la revendication 1, **caractérisé en ce que** la caractéristique physique du fluide caloporteur est une température de sortie au niveau de l'échangeur de chaleur (4-6).

3. Système selon la revendication 2, **caractérisé en ce que** la caractéristique physique est une différence entre une température d'entrée et la température de sortie d'un échangeur de chaleur (4-6).

4. Système selon l'une quelconque des revendications 1 à 3, **caractérisé en ce que** la caractéristique physique supplémentaire du système est un degré d'ouverture d'au moins une des vannes de régulation (20-22).

5. Système selon l'une quelconque des revendications 1 à 4, **caractérisé en ce que** les moyens de traitement traitent les caractéristiques physiques pendant un temps prédéterminé.

6. Système selon l'une quelconque des revendications 1 à 5, **caractérisé en ce que** les moyens de traitement comparent au moins une des caractéristiques physiques avec une valeur attendue.

7. Système selon la revendication 6, **caractérisé en ce que** la valeur attendue est basée sur au moins une autre caractéristique physique.

8. Système selon l'une quelconque des revendications 1 à 7, **caractérisé en ce que** les moyens de traitement détectent une mauvaise taille d'un échangeur de chaleur (4-6) lorsqu'au moins l'une des conditions suivantes est remplie :
a) une différence entre une température d'entrée et une température de sortie de l'échangeur de chaleur (4-6) est inférieure à une valeur prédéterminée et la température ambiante moyenne ne correspond pas à une température ambiante souhaitée,
b) la température de sortie s'écarte de plus d'une valeur prédéterminée de la température ambiante moyenne,
c) une différence entre une température d'entrée et une température de sortie de l'échangeur de chaleur (4-6) est inférieure à une valeur prédéterminée pendant plus d'un temps prédéterminé et une température ambiante souhaitée n'est pas atteinte après le temps prédéterminé, et une commande a été donnée pour ouvrir complètement la vanne de régulation (20-22) et les conditions sont remplies dans un nombre prédéterminé d'autres pièces.

9. Système selon l'une quelconque des revendications 1 à 8, **caractérisé en ce que** les moyens de traitement détectent un dysfonctionnement de l'alimentation du fluide caloporteur lorsqu'au moins une des conditions suivantes est remplie :
a) une différence entre une température d'entrée et une température de sortie est inférieure à une valeur prédéterminée, et une différence entre la température ambiante et une température ambiante souhaitée est supérieure à une valeur prédéterminée,
b) des vannes de régulation (20-22) sont ouvertes et la température d'entrée est inférieure à une température prévue,
c) une différence entre une température d'entrée et une température ambiante moyenne est inférieure à une valeur prédéterminée.

10. Système selon l'une quelconque des revendications 1 à 9, **caractérisé en ce que** les moyens de traitement détectent une mauvaise isolation des tuyaux si, au niveau d'une différence prédéterminée entre la température d'entrée et la température de sortie, la température d'entrée des échangeurs de chaleur dans le système varie de plus d'une plage prédéterminée.

11. Système selon l'une quelconque des revendications 1 à 10, **caractérisé en ce que** les moyens de traitement sont répartis dans le système.

12. Système selon la revendication 11, **caractérisé en ce que** les vannes de régulation (20-22) sont commandées par des actionneurs et qu'au moins deux actionneurs font partie des moyens de traitement.

13. Système selon l'une quelconque des revendications 1 à 12, **caractérisé en ce que** les moyens de traitement détectent un dysfonctionnement lorsqu'une combinaison d'un point de consigne de température basse et d'un delta T bas dans une pièce (2) et d'un point de consigne de température plus élevée et d'un delta T plus élevé dans une pièce voisine (3) se produit.
